# EUROPÄISCHE PATENTSCHRIFT

(11) **EP 3 903 587 B1**
(45) Veröffentlichungstag und Bekanntmachung des Hinweises auf die Patenterteilung: **22.03.2023**
(21) Anmeldenummer: 21154290.7
(22) Anmeldetag: 29.01.2021
(51) Int. Cl.: A22C 7/00, A22C 17/00

(54) **BAUGRUPPE ZUR HERSTELLUNG PASTÖSER FORMTEILE**
ASSEMBLY FOR PRODUCING PASTE-LIKE PARTS
MODULE DE FABRICATION DE PIÈCES MOULÉES PÂTEUSES

(30) Priorität: 27.03.2020 DE 102020204024
(43) Veröffentlichungstag der Anmeldung: 03.11.2021
(73) Patentinhaber: Albert Handtmann Maschinenfabrik GmbH & Co. KG, 88400 Biberach (DE)
(72) Erfinder: Baechtle, Manfred, 88433 Schemmerhofen (DE); Romer, Bernd, 88471 Laupheim (DE); Teufel, Daniel, 88433 Schemmerhofen (DE); Hirsch, Rudolf, 88250 Weingarten (DE)
(74) Vertreter: Grünecker Patent- und Rechtsanwälte PartG mbB

(56) Entgegenhaltungen:
- EP-A1- 1 447 006
- EP-A1- 3 066 932
- DE-A1-102008 013 806

## Beschreibung

Die Erfindung betrifft eine Baugruppe in einer Anlage zum Herstellen pastöser Formteile.

Aus EP 1 447 006 A1 ist es bekannt, mit Hilfe eines Rotationsmessers einer Baugruppe geschnittene Formteile herzustellen. Das Rotationsmesser wird in einer Lager-Schnittstelle direkt an der Füllmaschine von einem Drehantrieb angetrieben und tritt dabei zumindest teilweise in den den Strang enthaltenden Kanal ein. Der Kanal kann wahlweise runden, ovalen oder Sparerib-ähnlichen Querschnitt haben.

Aus EP 3 081 089 A1 ist eine Baugruppe mit einem Lochscheiben-Mechanismus bekannt, der mit rotierenden Lochscheiben aus dem Strang Kugeln, an den Kanten abgerundete Zylinder oder Pfropfen aus pastöser Masse portioniert und formt. Exakte Zylinder oder kreiszylindrische Scheiben lassen sich nicht herstellen. Alternativ zu Lochscheiben sind Mechanismen mit einem Diaphragma für solche gerundeten Formteile verwendbar.

Eine aus DE 10 2008 013 866 A1 bekannte Anlage ist mit einer Baugruppe ausgestattet, die nur eine einzige Sorte Formteile herstellen lässt. Für andere Sorten von Formteilen sind weitere Anlagen nötig.

Aus EP 3 066 932 A1 ist es bekannt, zur Herstellung von Formteilen mit unterschiedlichen Formen jeweils ein Modul von mehreren mit unterschiedlichen formerzeugenden Elementen ausgestatteten Modulen an die Fördermaschine zu koppeln. Bei einer Formänderung wird das Modul gegen ein anderes getauscht. Jedes Modul weist fest verbaute formerzeugende Elemente und einen Antrieb für diese auf. Die Module sind teuer in der Anschaffung. Eine Umrüstung ist zeitaufwändig und arbeitsintensiv.

Der Erfindung liegt die Aufgabe zugrunde, eine Baugruppe der eingangs genannten Art zur Herstellung von pastösen Formteilen anzugeben, mit denen wahlweise Formteile unterschiedlicher Formen mit hoher Taktzahl herstellbar sind, jedoch die jeweilige Umrüstung einfach und rasch durchführbar ist, und dafür nur wenige Teile benötigt werden.

Die gestellte Aufgabe wird mit den Merkmalen des Patentanspruchs 1 gelöst.

Zu einer Umstellung von einer Form der Formteile auf eine andere Form brauchen lediglich die formerzeugenden Elemente getauscht zu werden. Der Montierträger verbleibt an Ort und Stelle. Die unterschiedlichen formerzeugenden Elemente nutzen dieselbe Universal-Antriebs- und Lager-Schnittstelle und somit einen einzigen Antrieb. Es werden nur wenige, einfach herzustellende und zu reinigende Teile benötigt. Der Kostenaufwand ist moderat. Umrüstungen sind wenig zeitaufwändig oder arbeitsintensiv. Dieses Konzept ermöglicht ein breites Produktspektrum mit hoher Formtreue der Formteile. Es ist die wenigstens eine Schnittstelle mit einem an dem oder getrennt von dem Montierträger, vorzugsweise in der Füllmaschine oder in deren Maschinengestell, verbauten Drehantrieb verbindbar. Diese Platzierung des Drehantriebs nutzt ohnedies verfügbaren Einbauraum und verkürzt den Transportweg. Dabei weist die Schnittstelle eine Antriebswelle und wenigstens eine lösbare Verankerung für das formerzeugende Element auf. Über die Antriebswelle wird die Drehbewegung für das formerzeugende Element übertragen. Die Verankerung hält das formerzeugende Element an der Schnittstelle bzw. dem Montierträger. Es weist der Montierträger in unterschiedlichen Abständen vom Auslass mehrere Antriebs-Schnittstellen auf, die wahlweise mit dem Drehantrieb kuppelbar sind. Dies kann beispielsweise bei unterschiedlichen Rotationsmessern für großdurchmessrige oder kleindurchmessrige Formteile zweckmäßig sein, so dass das jeweilige Rotationsmesser möglichst nahe am Auslass arbeitet, um eine hohe Taktzahl selbst bei moderater Antriebsgeschwindigkeit zu erzielen.

Im Auslass des Montierträgers lässt sich ein den jeweiligen Strangquerschnitt definierendes Formrohr austauschbar festlegen. Hierbei kann der Montierträger das Formrohr stabil abstützen.

Das jeweilige formerzeugende Element kann mindestens ein an der zum Förderer weisenden Seite des Montierträgers montiertes Rotationsmesser oder ein Lochscheiben-Mechanismus sein. Mit dem Rotationsmesser lassen sich formtreue kreiszylindrische Formteile herstellen. Mit dem Lochscheiben-Mechanismus lassen sich hingegen runde, tropfenförmige oder abgerundete Formteile herstellen. Die Baugruppe wird bevorzugt mit einem Rotationsmesser oder dem Lochscheiben-Mechanismus bestückt. Dies ist nicht einschränkend aufzufassen, sondern es können weitere antreibbare formerzeugende Elemente genauso den Montierträger und die Schnittstelle nutzen.

Das Rotationsmesser hat eine oder mehrere um eine Messerachse verteilte, vorzugsweise sichelförmige, Schneiden. An den Schneiden sind schräge Schneidkanten geformt, wobei die glatte Seite des Rotationsmessers oder dessen Schneidkanten dem Montierträger benachbart platziert sein können, so dass die schrägen Schneidkanten die aus dem Strang abgetrennten
Formteile vom Strang in Richtung zum Förderer wegdrücken. Sichelförmige Schneiden gewährleisten einen sauberen ziehenden Schnitt durch den Strang. Alternativ könnten auch gerade Schneiden vorgesehen sein, oder eine doppelseitige Schneide, die pendelnd durch den Strang hin- und her bewegt wird.

Nach einem wichtigen Gesichtspunkt der Erfindung bildet das im Montierträger platzierte Austrittsende des Formrohrs eine Gegenschneide für das Rotationsmesser. Das Austrittsende kann bündig oder vorstehend im Montierträger platziert sein. Aus diesem Zusammenspiel resultiert ein sauberer Schnitt.

Nach einem weiteren, wichtigen Gesichtspunkt der Erfindung ist an der dem Montierträger abgewandten Seite des Rotationsmessers eine am Montierträger montierte, z. B. bogenförmige, Transferrutsche auf das Formrohr ausgerichtet, die in Drehrichtung des Rotationsmessers hinter dem Querschnitt des Formrohrs angeordnet ist. Die Transferrutsche leitet das vom Rotationsmesser aus dem Strang abgetrennte und weggedrängte Formteil zum übernehmenden Förderer. Der Abstand zwischen der Transferrutsche und dem Rotationsmesser kann gering sein, z.B. nur wenige zehntel Millimeter betragen.

Zweckmäßig erstreckt sich die Transferrutsche mit in Förderrichtung vorbestimmter Breite und im Bogenmaß über etwa 180°. Sie kann eine etwa kreiszylindrische Bogenkrümmung haben, die etwa der Bogenkrümmung des Querschnitts des größten, im Auslass montierbaren Formrohrs entspricht. Somit kann ein und dieselbe Transferrutsche für Formteile genutzt werden, die aus Strängen unterschiedlicher Querschnitte oder Durchmesser hergestellt werden. Es ist gegebenenfalls nur notwendig, die Position der Transferrutsche auf das jeweils benutzte Formrohr auszurichten, oder an dessen Durchmesser anzupassen.

Die Breite der Transferrutsche kann zwischen etwa 1,0 bis 2,5 cm betragen, und liegt vorzugsweise bei etwa 1,5 cm. Diese Breite gewährleistet eine sichere Führung jedes an den Förderer zu übergebenden Produkts.

Dabei kann die Transferrutsche am Rand eines plattenförmigen Einsatzes angeordnet sein, der in einer Öffnung eines an dem Montierträger montierten Halters tauschbar festgelegt ist. Zum Anpassen an die Größe und/oder den Durchmesser des eingesetzten Formrohrs kann entweder der Einsatz oder der Halter nachjustierbar sein.

In einer baulich einfachen und platzsparenden Ausführungsform ist der Montierträger eine hochkant verbaute Platte, in der an der der Schnittstelle gegenüberliegenden Seite des Strang-Auslasses eine zusätzliche Lagerstelle für beispielsweise den Lochscheiben-Mechanismus vorgesehen ist. Bei Einsatz des Rotationsmessers wird die Lagerstelle gegebenenfalls nicht benötigt. Bei Einsatz des Lochscheiben-Mechanismus wird über die Lagerstelle und die Schnittstelle eine stabilere Abstützung des Mechanismus gewährleistet.

Dabei kann der Lochscheiben-Mechanismus mindestens zwei übereinander liegende, relativ zueinander bewegbare Lochscheiben jeweils mit einer Formöffnung umfassen, die mit einer an der Schnittstelle antreibbar montierten Steuerscheibe gekoppelt sind, und, aus Stabilitätsgründen, vorzugsweise auch mit einer weiteren, nur drehbar gelagerten Steuerscheibe gekoppelt sind, die in der Lagerstelle des Montierträgers montiert ist.

Zweckmäßig ist entweder die Baugruppe mit einem, vorzugsweise mit der Füllmaschine verbindbaren, Gestellt ausgestattet, oder ist der Montierträger direkt an der Füllmaschine anbringbar.

Ein weiterer wichtiger Aspekt der Erfindung liegt darin, dass die Baugruppe relativ zum Förderer und/oder der Förderer oder ein die Formteile übernehmendes Förderelement des Förderers relativ zur Baugruppe über etwa 90° kippbar ist/sind. Diese Maßnahme ermöglicht es, den Ablagewinkel des Formteils zum übernehmenden Förderer und auch die gegenseitigen Abstände z.B. stufenlos einzustellen, beispielsweise um eine möglichst schonende Übergabe der Formteile sicherzustellen.

Der Erfindungsgegenstand wird anhand der Zeichnung erläutert. Es zeigen:
- Fig. 1: eine schematische Perspektivansicht einer Anlage zum Herstellen pastöser Formteile in einem Rüstzustand,
- Fig. 2: eine schematische Perspektivansicht der zur Herstellung von Formteilen anderer Form umgerüsteten Anlage,
- Fig. 3: eine Frontansicht einer Baugruppe mit formerzeugenden Elementen zum Herstellen formtreuer kreiszylindrischer Formteile, als Teil der Anlage von Fig. 1,
- Fig. 4: eine Perspektivansicht der Baugruppe mit einem anderen formerzeugenden Element zur Herstellung runder Formteile,
- Fig. 5: eine Detailvariante der Baugruppe, in einer schematischen Frontansicht,
- Fig. 6: eine schematische Seitenansicht zur Verdeutlichung einer möglichen Relativ-Positio-nierung zwischen der Baugruppe und dem Förderer, und
- Fig. 7: eine schematische Seitenansicht einer anderen, möglichen relativen Positionierung zwischen der Baugruppe und dem Förderer.

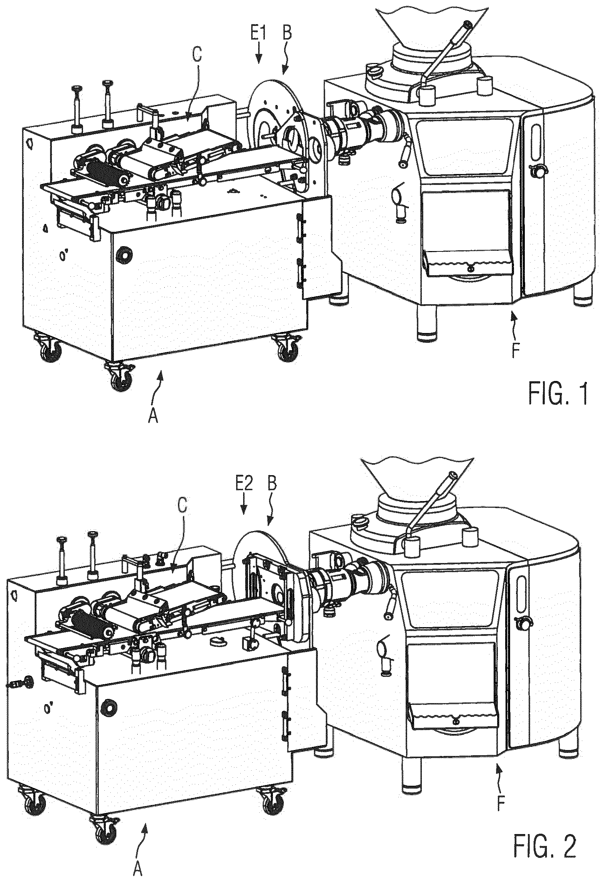

Die Fig. 1 und 2 zeigen dieselbe Anlage A in zwei unterschiedlichen Rüstzuständen zur Herstellung pastöser Formteile P, z.B. Formteilen auf Fleischbasis oder veganer Basis. Hauptbestandteile der Anlage A sind eine Füllmaschine F, ein getrennt davon aufgestellter Förderer C und eine dazwischen angeordnete, hier mit der Füllmaschine F verbundene oder auf andere Weise abgestützte Baugruppe B.

Die Füllmaschine F stellt einen kontinuierlichen Strang zur Verfügung, aus dem die Baugruppe B die Formteile P portioniert und formt und an den Förderer C übergibt, der die produzierten Formteile P abfördert.

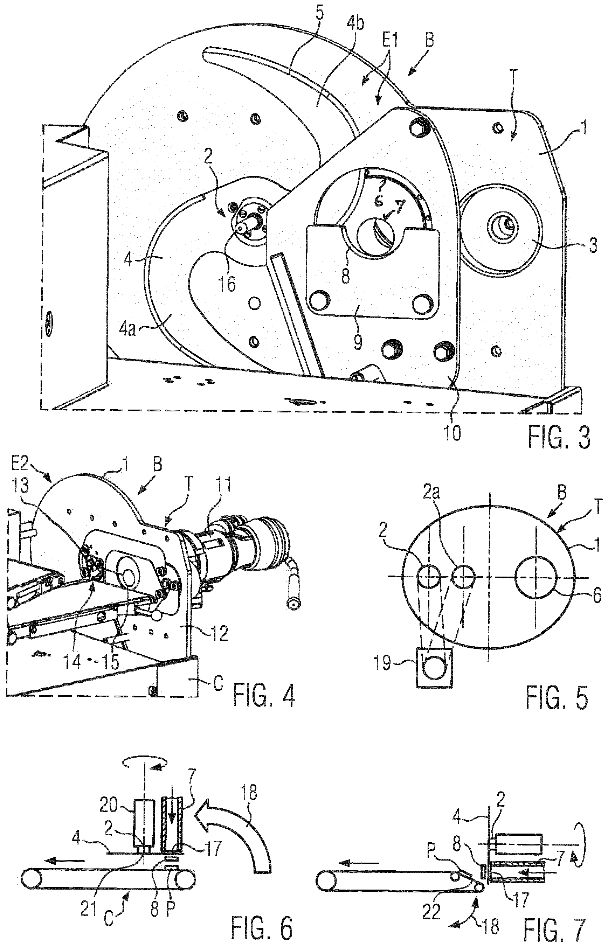

In dem Rüstzustand der Baugruppe B in Fig. 1 ist die Baugruppe B mit einem Rotationsmesser 4 als formerzeugendes Element E1 (siehe Fig. 3) bestückt, und mit einer Transferrutsche 8, und zwar zur Herstellung kreiszylindrischer Formteile P. Die Verwendung einer Transferrutsche ist optional und hängt u.a. auch von der Art des verwendeten Messers ab. In Fig. 2 ist die Baugruppe B hingegen mit einem Lochscheiben-Mechanismus 12 als formerzeugendes Element E2 bestückt, und zwar zur Herstellung runder oder gerundeter Formteile P.

Die Baugruppe B in Fig. 3 weist einen Montierträger T z: B. in Form einer hochkant verbauten Platte 1 auf, die stationär abgestützt ist und seitlich neben einem Auslass 6 wenigstens eine Universal-Antriebs- und Lager-Schnittstelle 2 aufweist. An der der Schnittstelle 2 gegenüberliegenden Seite des Auslasses 6 ist im Montierträger T eine weitere Lagerstelle 3 vorgesehen. Die Schnittstelle 2 enthält eine Antriebswelle 20 (siehe Fig. 6, 7) und eine Verankerung 16 bzw. 21 zum drehantreibbaren Montieren des jeweiligen formerzeugenden Elements E1 oder E2, in Fig. 3 E1.

Zur Herstellung kreiszylindrischer Formteile ist in Fig. 3 an der Schnittstelle 2 das Rotationsmesser 4 drehantreibbar montiert, das in der gezeigten Ausführungsform zwei um die Rotationsmesser-Achse verteilte, hier beispielsweise sichelförmige, Schneiden 4a, 4b aufweist, deren jede eine schräge Schneidkante 5 besitzt, hingegen an der zum Montierträger T weisenden Seite glatt sein kann. Das Rotationsmesser 4 könnte auch nur eine Schneide oder mehr als zwei Schneiden aufweisen; auch gerade oder anders geformte Schneiden sind denkbar. Alternativ kann ein pendelnd hin- und herbewegbares zweischneidiges Messer oder ein Drahtschneider verwendet werden.

Im Auslass 6 ist ein Formrohr 7 fest verbaut, das die Form und den Querschnitt des in der Baugruppe B bearbeiteten Strangs bestimmt. In der gezeigten Ausführungsform in Fig. 3 ist das Formrohr 7 z. B. deutlich kleiner als der Auslass 6. Das im Montierträger T festgelegte Austrittsende 17 (Fig. 6, 7) des Formrohrs 7 kann eine Gegenschneide für das Rotationsmesser 4 bilden, und bündig oder vortretend platzierbar sein.

Ferner ist in Fig. 3 an dem Montierträger T optional ein plattenförmiger Halter 10 montiert, der eine größere Öffnung als den Auslass 6 aufweist, und in welchem ein plattenförmiger Einsatz 9 montiert ist, der mit seiner Randkante eine Transferrutsche 8 für die hergestellten Formteile 7bildet, die in der gezeigten Ausführungsform bogenförmig gekrümmt ist, und zwar z. B. mit einem Krümmungsradius, der größer ist als der Krümmungsradius des Formrohrs 7, jedoch auf das Formrohr 7 ausgerichtet ist, so dass etwa die tiefste Stelle der Transferrutsche 8 auf der Höhe des tiefsten Punkts des Querschnitts des Formrohrs 7 liegt, und zwar gegebenenfalls nur wenige zehntel Millimeter entfernt von dem Rotationsmesser 4. Die Transferrutsche 8 erstreckt sich in der gezeigten Ausführungsform über annähernd 180° im Bogenmaß, kann aber auch über einen kleineren Bereich greifen, als gezeigt. Alternativ könnte die Transferrutsche 8 mit ihrem Krümmungsradius relativ exakt an den Krümmungsradius des Querschnitts des Formrohrs 7 angepasst sein. Die Transferrutsche 8 hat in Förderrichtung eine vorbestimmte Breite zwischen etwa 1,0 bis 2,5 cm, vorzugsweise etwa 1,5 cm, und kann aus einem glatten, gleitfreudigen Material bestehen oder eine glatte und gleitfreudige Beschichtung aufweisen, z.B. aus PTFE.

Die Lagerstelle 3 ist ausgebildet zum Aufnehmen einer drehbar gelagerten, nicht gezeigten Steuerscheibe des in Fig. 2 angedeuteten Lochscheiben-Mechanismus 12.

Fig. 4 verdeutlicht die Baugruppe B im zweiten Rüstzustand. Hier ist am Montierträger T der Lochscheiben-Mechanismus 12 montiert, der mindestens zwei übereinander liegende Lochscheiben 13 mit jeweils einer Durchtrittsöffnung 15 umfasst. Die Lochscheiben 13 werden durch eine an der Schnittstelle 2 montierte Steuerscheibe, die sich um einen eingeschränkten Winkel hin- und hergehend bewegt, angetrieben, so dass sich die verbleibende Durchtriffsöffnung z.B. periodisch vergrößert und verkleinert, um aus dem hindurchtretenden Strang kugelige oder gerundete Formteile P zu portionieren und zu formen. Auch in diesem zweiten Rüstzustand könnte die in Fig. 3 gezeigte und erläuterte Transferrutsche 8 (Option) vorgesehen sein. Fig. 4 zeigt auch einen von der Füllmaschine F ausgehenden Rohrstrang 11, durch den der Strang in das im Montierträger T verbaute Formrohr F und somit zum Lochscheiben-Mechanismus 12 gefördert wird.

Fig. 5 verdeutlich eine Detailvariante der Baugruppe B. Hier sind in unterschiedlichen Abständen vom Auslass 6 im Montierträger T mehrere Universal-Drehantriebs- und Lager-Schnittstellen 2, 2a vorgesehen, die wahlweise mit einem Drehantrieb 19 verbindbar sind, z.B. über Zahnriemen. Abhängig davon, ob ein großes Formrohr F eingesetzt ist, oder ein kleineres Formrohr, wird die eine Schnittstelle 2 oder die andere Schnittstelle 2a zum Antrieb des formerzeugenden Elements E1 oder E2 benutzt. Beispielsweise wird bei großem Formrohr 7 und großem Rotationsmesser 4 die Schnittstelle 2 benutzt, hingegen bei kleinem Formrohr 7 und kleinerem Rotationsmesser 4 die Schnittstelle 2a, so dass mit der Schnittstelle 2a eine höhere Dynamik des kleineren Rotationsmessers 4 und somit eine höhere Portionenleistung erzielt werden können.

In Fig. 6 ist schematisch angedeutet, dass die Baugruppe B in Richtung des Pfeils 18 aus der in Fig. 3 gezeigten Position relativ zum Förderer C um bis zu 90° gekippt wird, so dass die mit dem Rotationsmesser 4 abgeteilten Formteile P über die Transferrutsche 8 von oben auf den Förderer C abgelegt werden.

In Fig. 7 ist hingegen andeutet, dass der Förderer C einen in Relation zur gemäß Fig. 3 positionierten Baugruppe B so gekippt ist, dass die Formteile P über die Transferrutsche 8 schonend auf einen ansteigenden Teil 22 des Förderers C überführt werden. Dieser Teil 22 des Förderers oder der gesamte Förderer kann in Richtung des Doppelpfeils 18 um bis zu etwa ± 60° , vorzugsweise um bis zu ± 45°, aus der horizontalen Lage gekippt werden. Auch eine Kombination der Maßnahmen der Fig. 6 und 7 ist möglich, d.h. ein teilweises Kippen der Baugruppe B und ein teilweises Kippen des Förderers oder des Teils 22 des Förderers.

Zum Umrüsten der Anlage bzw. der Baugruppe brauchen lediglich die formerzeugenden Elemente E1, E2 gegeneinander getauscht und am Montierträger T montiert zu werden. Die unterschiedlichen formerzeugenden Elemente E1, E2 nutzen die gleichen Universal-Antriebs- und Lager-Schnittstelle 2, 2a. So können in dem Rüstzustand gemäß Fig. 1 und Fig. 3 exakt scheibenförmige Formteile P mit exakt kreiszylindrischer oder beliebig wählbarer Form hergestellt werden, hingegen in dem Rüstzustand gemäß Fig. 2 und Fig. 4 kugelige oder gerundete oder tropfenförmige Formteile P. Durch Tausch von nur wenigen Teilen wird ein breiteres Produktspektrum in ein und derselben Anlage A ermöglicht.

Die Darstellungen in den Figuren zeigen keine Gehäuseteile, die üblicherweise im Bereich der Baugruppe B angebracht werden, und gegebenenfalls auch im Bereich des Förderers. Wenn die Baugruppe B wie in Fig. 6 relativ zum Förderer V gekippt wird, dann kann statt des Rohrstrangs 11 in Fig. 4 ein Knierohr verbaut werden. Anstelle des Lochscheiben-Mechanismus 12 in Fig. 4 könnte auch ein Diaphragma verwendet werden.

Der finanzielle Aufwand für die Umrüstbarkeit der Anlage A ist nur moderat. Ferner ergibt sich ein günstig kurzer Transportweg von der Füllmaschine F zum formerzeugenden Element E1 oder E2 und zum Förderer C, da der Drehantrieb 19 (Fig. 5) im Maschinenständer oder Gestell der Füllmaschine oder in einem Maschinenständer der Baugruppe B so eingebaut sein kann, dass er sich nicht in Richtung zur Füllmaschine F erstreckt. Eine kurze Transportstrecke ist im Regelfall für die Produktqualität günstig.

## Patentansprüche

1. Baugruppe (B) zur Herstellung pastöser Formteile (P) aus einem Strang, wobei die Baugruppe (B) ausgebildet ist zur Anordnung zwischen einer den Strang liefernden Füllmaschine (F) und einem die Formteile (P) übernehmenden Förderer (C), mit einem an die Form der Formteile (P) angepassten, antreibbaren formerzeugenden Element (E1, E2), wobei die Baugruppe (B) zur wahlweisen Herstellung unterschiedlicher Formteile (P) und zur Montage verschiedener formerzeugender Elemente (E1, E2) einen Montierträger (T) mit wenigstens einer Universal-Antriebs- und Lager-Schnittstelle (2, 2a) für die über die Schnittstelle (2, 2a) antreibbaren formerzeugenden Elemente (E1, E2) aufweist, wobei die wenigstens eine Schnittstelle (2, 2a) mit einem an dem oder getrennt von dem Montierträger (T) verbauten Drehantrieb (19) verbindbar ist und eine Antriebswelle (20) und wenigstens eine lösbare Verankerung (21) für das formerzeugende Element (E1, E2) aufweist, und wobei der Montierträger (T) in unterschiedlichen Abständen von einem Auslass (6) mehrere Schnittstellen (2, 2a) aufweist, die wahlweise mit dem Drehantrieb (19) kuppelbar sind.

2. Baugruppe nach Anspruch 1, **dadurch gekennzeichnet, dass** im Auslass (6) im Montierträger (T) ein den Strangquerschnitt definierendes Formrohr (7) austauschbar festgelegt ist.

3. Baugruppe nach Anspruch 1, **dadurch gekennzeichnet, dass** das jeweilige formerzeugende Element (E1, E2) mindestens ein an der zum Förderer (C) weisenden Seite des Montierträgers (T) montiertes Rotationsmesser (4) oder ein Lochscheiben-Mechanismus (12) ist.

4. Baugruppe nach Anspruch 3, **dadurch gekennzeichnet, dass** das Rotationsmesser (4) eine oder mehrere um eine Messerachse verteilte, vorzugsweise sichelförmige, Schneiden (4a, 4b) aufweist.

5. Baugruppe nach Anspruch 2, **dadurch gekennzeichnet, dass** ein Austrittsende (17) des im Montierträger (T) platzierten Formrohrs (7) eine Gegenschneide für das montierte formerzeugende Element (E1, E2) bildet.

6. Baugruppe nach Anspruch 2 und 3, **dadurch gekennzeichnet, dass** an der dem Montierträger (T) abgewandten Seite des Rotationsmessers (4) eine am Montierträger (T) montierte Transferrutsche (8) für die Formteile (P) auf das Formrohr (7) ausgerichtet ist, die in Drehrichtung des Rotationsmessers (4) hinter dem Querschnitt des Formrohrs (7) angeordnet ist.

7. Baugruppe nach Anspruch 6, **dadurch gekennzeichnet, dass** sich die Transferrutsche (8) mit in Förderrichtung vorbestimmter Breite und im Bogenmaß über etwa 180° erstreckt, und, vorzugsweise, eine etwa kreiszylindrische Bogenkrümmung hat, die etwa der Bogenkrümmung des Querschnitts des größten, im Auslass (6) montierbaren Formrohrs (7) entspricht.

8. Baugruppe nach Anspruch 6, **dadurch gekennzeichnet, dass** die Breite der Transferrutsche (8) zwischen etwa 1,0 bis 2,5 cm, vorzugsweise etwa 1,5 cm, beträgt.

9. Baugruppe nach Anspruch 6, **dadurch gekennzeichnet, dass** die Transferrutsche (8) am Rand eines plattenförmigen Einsatzes (9) ausgebildet ist, der in einer Öffnung eines an dem Montierträger (T) montierten Halters (10) austauschbar festgelegt ist.

10. Baugruppe nach Anspruch 3, **dadurch gekennzeichnet, dass** der Montierträger (T) eine hochkant verbaute Platte (1) ist, in der an der der Schnittstelle (2, 2a) gegenüberliegenden Seite des Auslasses (6) eine Lagerstelle (3) für den Lochscheiben-Mechanismus (12) vorgesehen ist.

11. Baugruppe nach Anspruch 10, **dadurch gekennzeichnet, dass** der Lochscheiben-Mechanismus (12) mindestens zwei übereinanderliegende, relativ zueinander bewegbare Lochscheiben (13) jeweils mit einer Formöffnung (15) umfasst, die mit zumindest einer an der Schnittstelle (2, 2a) montierten, antreibbaren Steuerscheibe (14) gekoppelt sind, und, vorzugsweise, auch mit einer weiteren drehbaren Steuerscheibe gekoppelt sind, die in der Lagerstelle (3) des Montierträgers (T) montiert ist.

12. Baugruppe nach wenigstens einem der vorhergehenden Ansprüche, **dadurch gekennzeichnet, dass** entweder die Baugruppe (B) ein, vorzugsweise mit der Füllmaschine (F) verbindbares, Gestell aufweist, oder der Montierträger (T) direkt an der Füllmaschine (F) anbringbar ist.

13. Baugruppe nach wenigstens einem der vorhergehenden Ansprüche, **dadurch gekennzeichnet, dass** die Baugruppe (B) relativ zum Förderer (C) und/oder der Förderer (C) oder zumindest ein die Formteile (P) übernehmendes Förderelement (22) des Förderers (C) relativ zur Baugruppe (B) über etwa ± 60° kippbar ist/sind.

## Claims

1. An assembly (B) for producing pasty moulded articles (P) from a strand, the assembly (B) being configured for arrangement between a filling machine (F) supplying the strand and a conveyor (C) receiving the moulded articles (P), wherein it comprises a driveable shaping member (E1, E2) adapted to the shape of the moulded articles (P), wherein the assembly (B) for selectively producing various moulded articles (P) and for mounting different shaping members (E1, E2) comprises a mounting support (T) including at least a universal driving and bearing interface (2, 2a) for the shaping members (E1, E2) which can be driven via the interface (2, 2a), wherein the at least one interface (2, 2a) can be connected to a rotary drive (19) mounted to the mounting support (T) or installed separately from it and includes a drive shaft (20) and at least one releasable support (21) for the shaping member (E1, E2), and wherein the mounting support (T) has, in varying distances from an outlet (6), a plurality of interfaces (2, 2a) which can be selectively coupled to the rotary drive (19).

2. The assembly according to claim 1, **characterized in that** a shaping tube (7) defining the cross-section of the strand is interchangeably provided in the outlet (6) in the mounting support (T).

3. The assembly according to claim 1, **characterized in that** the respective shaping member (E1, E2) is at least one of a rotary knife (4) mounted on the side of the mounting support (T) facing the conveyor (C) and a perforated disc mechanism (12).

4. The assembly according to claim 3, **characterized in that** the rotary knife (4) includes one or more, preferably crescent-shaped, cutting edges (4a, 4b) distributed around a knife axis.

5. The assembly according to claim 2, **characterized in that** an outlet end (17) of the shaping tube (7) positioned at the mounting support (T) forms an opposing cutting edge for the mounted shaping member (E1, E2).

6. The assembly according to claims 2 and 3, **characterized in that,** on the side of the rotary knife (4) facing away from the mounting support (T), a transfer chute (8) for the moulded articles (P) mounted to the mounting support (T) is aligned with the shaping tube (7) and wherein it is arranged behind the cross section of the shaping tube (7) in the rotational direction of the rotary knife (4).

7. The assembly according to claim 6, **characterized in that** the transfer chute (8) extends over approximately 180° (radian measure) with a predetermined width in the conveying direction and, preferably, has an approximately circular-cylindrical curvature roughly corresponding to the curvature of the cross-section of the largest possible shaping tube (7) for mounting in the outlet (6).

8. The assembly according to claim 6, **characterized in that** the width of the transfer chute (8) ranges from about 1.0 to 2.5 cm, preferably is about 1.5 cm.

9. The assembly according to claim 6, **characterized in that** the transfer chute (8) is formed at the edge of a plate-shaped insert (9) provided exchangeably in an opening of a holder (10) mounted on the mounting support (T).

10. The assembly according to claim 3, **characterized in that** the mounting support (T) is a plate (1) installed on edge, in which a bearing position (3) for the perforated disc mechanism (12) is provided on the side of the outlet (6) opposite the interface (2, 2a).

11. The assembly according to claim 10, **characterized in that** the perforated disc mechanism (12) comprises at least two superposed perforated discs (13) movable relative to each other and each having a shaping orifice (15), wherein they are coupled to at least one drivable control disc (14) mounted at the interface (2, 2a), and, preferably, are also coupled to a further rotatable control disc mounted at the bearing position (3) of the mounting support (T).

12. The assembly according to at least one of the preceding claims, **characterized in that** either the assembly (B) includes a frame which can preferably be connected to the filling machine (F), or that the mounting support (T) can be attached directly to the filling machine (F).

13. The assembly according to at least one of the preceding claims, **characterized in that** the assembly (B) can be tilted relative to the conveyor (C) and/or the conveyor (C) or at least one conveyor member (22) of the conveyor (C) receiving the moulded articles (P) can be tilted relative to the assembly (B) over approximately ± 60°.

## Revendications

1. Assemblage (B) pour la fabrication de pièces moulées (P) pâteuses à partir d'un cordon, l'assemblage (B) étant conçu pour être disposé entre une machine de remplissage (F) alimentant le cordon et un convoyeur (C) recevant les pièces moulées (P), avec un élément générateur de forme (E1, E2) adapté à la forme des pièces moulées (P), dans lequel l'assemblage (B) pour la production sélective de différentes pièces moulées (P) ou pour l'assemblage de différents éléments générateurs de forme (E1, E2) comprend un support de montage (T) avec au moins une interface (2, 2a) universelle d'entraînement et de palier pour les éléments générateurs de forme (E1, E2) qui peuvent être entraînés par l'intermédiaire de l'interface (2, 2a), dans lequel au moins une interface (2, 2a) peut être reliée à un entraînement rotatif (19) installé sur ou séparément du support de montage (T) et présente un arbre d'entraînement (20) et au moins un ancrage amovible (21) pour l'élément générateur de forme (E1, E2), et dans lequel le support de montage (T) présente, à différentes distances d'une sortie (6), une pluralité d'interfaces (2, 2a) qui peuvent être couplées sélectivement à l'entraînement rotatif (19).

2. Assemblage selon la revendication 1, **caractérisé en ce qu'**un tube de formage (7) définissant la section transversale du cordon est fixé de manière interchangeable dans la sortie (6) dans le support de montage (T).

3. Assemblage selon la revendication 1, **caractérisé en ce que** l'élément générateur de forme (E1, E2) respectif est au moins une lame rotative (4) montée sur le côté du support de montage (T) faisant face au convoyeur (C) ou un mécanisme à disque perforé (12).

4. Assemblage selon la revendication 3, **caractérisé en ce que** la lame rotative (4) a une ou plusieurs lames (4a, 4b), de préférence en forme de faucille, réparties autour d'un axe de lame.

5. Assemblage selon la revendication 2, **caractérisé en ce qu'**une extrémité de sortie (17) du tube de formage (7) placée dans le support de montage (T) forme une contre-lame pour l'élément générateur de forme (E1, E2) monté.

6. Assemblage selon les revendications 2 et 3, **caractérisé en ce que**, sur le côté de la lame rotative (4) opposé au support de montage (T), une goulotte de transfert (8) pour les pièces moulées (P), qui est montée sur le support de montage (T), est alignée avec le tube de formage (7) et est disposée derrière la section transversale du tube de formage (7) dans le sens de rotation de la lame rotative (4).

7. Assemblage selon la revendication 6, **caractérisé en ce que** la goulotte de transfert (8) s'étend avec une largeur prédéterminée dans le sens de transport et en mesure radiale sur environ 180°, et, de préférence, a une courbure d'arc approximativement circulaire-cylindrique qui correspond approximativement à la courbure d'arc de la section transversale du plus grand tube de formage (7) pouvant être monté dans la sortie (6).

8. Assemblage selon la revendication 6, **caractérisé en ce que** la largeur de la goulotte de transfert (8) est comprise entre environ 1,0 et 2,5 cm, de préférence environ 1,5 cm.

9. Assemblage selon la revendication 6, **caractérisé en ce que** la goulotte de transfert (8) est formée sur le bord d'un insert en forme de plaque (9) qui est fixé de manière remplaçable dans une ouverture d'un support (10) monté sur le support de montage (T).

10. Assemblage selon la revendication 3, **caractérisé en ce que** le support de montage (T) est une plaque (1) installée debout, dans laquelle un point d'appui (3) pour le mécanisme à disque perforé (12) est prévu sur le côté de la sortie (6) opposé à l'interface (2, 2a).

11. Assemblage selon la revendication 10, **caractérisé en ce que** le mécanisme à disque perforé (12) comprend au moins deux disques perforés superposés (13) mobiles l'un par rapport à l'autre, chacun avec une ouverture formée (15), qui sont couplés à au moins un disque de commande entraînable (14) monté sur l'interface (2, 2a), et, de préférence, sont également couplés à un autre disque de commande rotatif monté dans le point d'appui (3) du support de montage (T).

12. Assemblage selon l'une quelconque des revendications précédentes, **caractérisé en ce que** soit l'assemblage (B) présente un cadre qui peut être relié de préférence à la machine de remplissage (F), soit le support de montage (T) peut être fixé directement à la machine de remplissage (F).

13. Assemblage selon l'une quelconque des revendications précédentes, **caractérisé en ce que** l'assemblage (B) peut être incliné par rapport au convoyeur (C) et/ou le convoyeur (C) ou au moins un élément de convoyeur (22) du convoyeur (C) recevant les pièces moulées (P) peut être incliné par rapport à l'assemblage (B) sur environ ± 60°.
